# EUROPÄISCHE PATENTSCHRIFT

(11) **EP 2 774 951 B1**
(45) Veröffentlichungstag und Bekanntmachung des Hinweises auf die Patenterteilung: **03.02.2016**
(21) Anmeldenummer: 13157983.1
(22) Anmeldetag: 06.03.2013
(51) Int. Cl.: C08L 67/02, C08L 67/04, B32B 27/36, C08J 5/18

(54) **Polymermischungen enthaltend langkettige Polykondensate**
Polymer blends containing long-chain polycondensates
Mélanges de polymères contenant des polycondensés à chaîne longue

(43) Veröffentlichungstag der Anmeldung: 10.09.2014
(73) Patentinhaber: BASF SE, 67056 Ludwigshafen (DE)
(72) Erfinder: Yamamoto, Motonori, 68199 Mannheim (DE); Grüner, Simon Alexander, 67482 Altdorf (DE); Lehenmeier, Maximilian, 69117 Heidelberg (DE)

(56) Entgegenhaltungen:
- DE-A1- 10 010 826

## Beschreibung

Die vorliegende Erfindung betrifft eine Polymermischung enthaltend:
i) 98 bis 99,99 Gew.-%, bezogen auf die Komponenten i bis ii, eines Polykondensats erhältlich aus den Monomeren:
   a) mindestens einer α,ω-C₁₈-C₃₀-Dicarbonsäure oder eines entsprechenden Dicarbonsäurederivats und
   b) mindestens eines α,ω-C₂-C₃₀-Diols,
   oder erhältlich aus dem Monomer:
   a') einer ω-Hydroxy-ω-C₁₀-C₂₆-carbonsäure;
ii) 0,01 bis 2 Gew.-%, bezogen auf die Komponenten i bis ii, mindestens eines Naturwachses.

Verfahren zur Herstellung von Polykondensaten wie Polyestern auf Basis langkettiger Dicarbonsäuren oder auch langkettiger Diole sind bereits in der jüngeren Literatur beschrieben. So sind beispielsweise Polyester auf Basis von C₁₈-Dicarbonsäuren aus CN 1854167 und auf Basis von C₁₉- und C₂₃-Dicarbonsäuren und/oder entsprechender Diole aus WO 2011/089256 bekannt. Die genannten Schriften befassen sich insbesondere mit der Synthese der neuen Polymere, nicht jedoch mit ihren Eigenschaften.

Aus EP 1 263 859 ist weiterhin bekannt, dass Bienenwachs bei stärkehaltigen, kurzkettigen Polyestern die Barriereeigenschaften gegenüber Wasserdampf verbessert. Auf diese Weise können Filme mit einer Wasserdampfbarriere von 1600 bis 5700 g · µm m-² · d⁻¹ bereitgestellt werden. Für zahlreiche Anwendungen bei Lebensmittelverpackungen reicht dies nicht aus. Hier wird eine deutlich niedrigere Wasserdampfbarriere von kleiner 1000 g · µm m-² · d⁻¹ oder vorzugsweise kleiner 500 g · µm · m-² · d⁻¹, besonderes bevorzugt kleiner 200 g µm m-² · d⁻¹ gefordert.

Überraschenderweise wurde nun gefunden, dass die eingangs definierten Polymermischungen derart niedrige Wasserdampfdurchlässigkeit aufweisen.

Im Folgenden wird die Erfindung näher beschrieben.

Wie eingangs beschrieben sind die Polyester i auf Basis α,ω-C₁₈-C₃₀-Dicarbonsäuren auf literaturbekannten Wegen (wie beispielsweise CN 1854167 und WO 2011/089256) zugänglich.

Die Synthese der beschriebenen Polyester erfolgt in einer direkten Polykondensationsreaktion der einzelnen Komponenten. Die Dicarbonsäurederivate werden dabei zusammen mit dem Diol in Anwesenheit eines Umesterungskatalysators direkt zum Polykondensat hohen Molekulargewichts umgesetzt. Als Katalysatoren werden üblicherweise Zink-, Aluminium- und insbesondere 06.03.2013

Titankatalysatoren eingesetzt. Titankatalysatoren wie Tetra(isopropyl)orthotitanat und insbesondere Tetrabutylorthotitanat (TBOT) haben gegenüber den in der Literatur häufig verwendeten Zinn-, Antimon-, Kobalt- und Bleikatalysatoren wie beispielsweise Zinndioctanat den Vorteil, dass im Produkt verbleibende Restmengen des Katalysators oder Folgeprodukt des Katalysators weniger toxisch sind.

Die Dicarbonsäuren werden in Anwesenheit eines Überschusses an Diol zusammen mit dem Katalysator in der Regel zunächst während eines Zeitraumes von etwa 60-180 min auf eine Innentemperatur von 170 bis 230 °C erhitzt und entstehendes Wasser abdestilliert. Anschließend wird die Schmelze des so erhaltenen Präpolyesters üblicherweise bei einer Innentemperatur von 200 zu 250 °C innerhalb von 3 bis 6 Stunden bei vermindertem Druck unter Abdestillieren freiwerdenden Diols bis zur gewünschten Viskosität mit einer Viskositätszahl (VZ) von 100 bis 450 mL/g und vorzugsweise 120 bis 250 mL/g kondensiert.

Die Polyester lassen sich darüber hinaus nach dem in WO 96/15173 und EP-A 488 617 beschriebenen Verfahren herstellen. Als vorteilhaft hat es sich erwiesen, zunächst die Komponenten a) und b) zu einem Präpolyester mit einer VZ von 50 bis 100 mL/g, vorzugsweise 60 bis 80 mL/g umzusetzen und diesen anschließend mit Kettenverlängeren, beispielsweise mit Diisocyanaten oder mit epoxidhaltigen Polymethacrylaten in einer Kettenverlängerungsreaktion zu einem Polyester mit einer VZ von 100 bis 450 mL/g, vorzugsweise 120 bis 250 mL/g umzusetzen.

Die α,ω-C₁₈-C₃₀-Dicarbonsäuren selbst sind literaturbekannt. Zahlreiche dieser Dicarbonsäuren sind aus erneuerbaren Rohstoffen zugänglich. So kann die α,ω-C₁₈-Dicarbonsäure aus Ölsäure hergestellt werden und die C₁₉- und C₂₃-Dicarbonsäuren aus Ölsäure und Erucasäure Die Herstellung der C₂₆-Dicarbonsäure wird in der EP 12180147.6 detailliert beschrieben.

Die Dicarbonsäuren können entweder als freie Säure oder in Form esterbildender Derivate eingesetzt werden. Als esterbildende Derivate sind insbesondere die Di-C₁- bis C₆-Alkylester, wie Dimethyl-, Diethyl-, Di-n-propyl, Di-isopropyl, Di-n-butyl, Di-iso-butyl, Di-t-butyl, Di-n-pentyl-, Di-iso-pentyl oder Di-n-hexylester zu nennen. Anhydride der Dicarbonsäuren können ebenfalls eingesetzt werden.

Dabei können die Dicarbonsäuren oder deren esterbildenden Derivate, einzeln oder als Gemisch eingesetzt werden.

Die α,ω-C₂-C₃₀-Diole können nach literaturbekanntes Verfahren hergestellt werden. Besonders bevorzugt sind Ethylenglykol, 1,3-Propandiol und 1,4-Butandiol, die beide aus nachwachsenden Rohstoffen zugänglich sind. Es können auch Mischungen der beiden Diole verwendet werden. Aufgrund der höheren Schmelztemperaturen und der besseren Kristallisation des gebildeten Polyesters ist 1,4-Butandiol und Ethylenglykol als Diol bevorzugt.

In der Regel wird zu Beginn der Polymerisation das Diol zu den Disäuren in einem Verhältnis von Diol zu Disäuren von 1,0 bis 2,5: 1 und vorzugsweise 1,3 bis 2,2 :1 eingestellt. Überschüssige Diolmengen werden während der Polymerisation abgezogen, sodass sich am Ende der Polymerisation ein ungefähr äquimolares Verhältnis einstellt. Unter ungefähr äquimolar wird ein Diol/Disäuren-Verhältnis von 0,99 bis 1,01 verstanden.

Die genannten Polyester können Hydroxy- und/oder Carboxylend-gruppen in jedem beliebigen Verhältnis aufweisen. Die genannten aliphatischen Polyester können auch endgruppenmodifiziert werden. So können beispielsweise OH-Endgruppen durch Umsetzung mit Phthalsäure, Phthalsäureanhydrid, Trimellithsäure, Trimellithsäureanhydrid, Pyromellithsäure oder Pyromellithsäureanhydrid säuremodifiziert werden. Copolymere mit niedrigen Säurezahlen sind bevorzugt.

In der Regel werden 0,01 bis 5 Gew.-%, vorzugsweise 0,2 bis 4 Gew.-% und insbesondere bevorzugt 0,35 bis 3 Gew.-% bezogen auf das Gesamtgewicht des Polyesters, eines Vernetzers und/oder Kettenverlängerers ausgewählt aus der Gruppe bestehend aus: einem polyfunktionellen Isocyanat, Isocyanurat, Oxazolin, Carbonsäureanhydrid wie Maleinsäureanhydrid, Epoxid (insbesondere einem epoxidhaltigen Poly(meth)acrylats), einem mindestens trifunktionellen Alkohol oder einer mindestens trifunktionellen Carbonsäure eingesetzt. Als Kettenverlängerer kommen polyfunktionelle und insbesondere difunktionelle Isocyanate, Isocyanurate, Oxazoline oder Epoxide in Frage.

Kettenverlängerer sowie Alkohole oder Carbonsäurederivate mit mindestens drei funktionellen Gruppen können auch als Vernetzer aufgefasst werden. Besonders bevorzugte Verbindungen haben drei bis sechs funktionellen Gruppen. Beispielhaft seien genannt: Weinsäure, Zitronensäure, Äpfelsäure; Trimethylolpropan, Trimethylolethan; Pentaerythrit; Polyethertriole und Glycerin, Trimesinsäure, Trimellitsäure, Trimellitsäureanhydrid, Pyromellitsäure und Pyromellitsäuredianhydrid. Bevorzugt sind Polyole wie Trimethylolpropan, Pentaerythrit und insbesondere Glycerin. Mittels der Komponenten lassen sich biologisch abbaubare Polyester mit einer strukturellen Viskosität aufbauen. Das rheologische Verhalten der Schmelzen verbessert sich; die biologisch abbaubaren Polyester lassen sich leichter verarbeiten, beispielsweise besser durch Schmelzeverfestigung zu Folien ausziehen.

Unter Epoxiden wird insbesondere Epoxidgruppen-haltiges Copolymer auf Basis Styrol, Acrylsäureester und/oder Methacrylsäureester verstanden. Die Epoxidgruppen tragenden Einheiten sind vorzugsweise Glycidyl(meth)acrylate. Als vorteilhaft haben sich Copolymere mit einem Glycidylmethacrylat-Anteil von größer 20, besonders bevorzugt von größer 30 und insbesondere bevorzugt von größer 50 Gew.-% des Copolymers erwiesen. Das Epoxid-Äquivalentgewicht (EEW) in diesen Polymeren beträgt vorzugsweise 150 bis 3000 und insbesondere bevorzugt 200 bis 500 g/Äquivalent. Das mittlere Molekulargewicht (Gewichtsmittel) M_{W} der Polymere beträgt vorzugsweise 2000 bis 25.000, insbesondere 3000 bis 8.000. Das mittlere Molekulargewicht (Zahlenmittel) Mₙ der Polymere beträgt vorzugsweise 400 bis 6.000, insbesondere 1000 bis 4.000. Die Polydispersität (Q) liegt im Allgemeinen zwischen 1.5 und 5. Epoxidgruppenhaltige Copolymere des obengenannten Typs werden beispielsweise von der BASF Resins B.V. unter der Marke Joncryl^{®} ADR vertrieben. Als Kettenverlängerer besonders geeignet ist beispielsweise Joncryl^{®} ADR 4368.

In der Regel ist es sinnvoll die vernetzenden (mindestens trifunktionellen) Verbindungen zu einem früheren Zeitpunkt der Polymerisation zuzugeben.

Als bifunktionelle Kettenverlängerer eignen sich die folgenden Verbindungen:
Unter einem aromatischen Diisocyanat werden vor allem Toluylen-2,4-diisocyanat, Toluylen-2,6-diisocyanat, 2,2'-Diphenylmethandiisocyanat, 2,4'-Diphenylmethandiisocyanat, 4,4'-Diphenylmethan-diisocyanat, Naphthylen-1,5-diisocyanat oder Xylylen-diisocyanat verstanden. Darunter werden 2,2'-, 2,4'- sowie 4,4'-Diphenylmethandiisocyanat besonders bevorzugt. Im Allgemeinen werden letztere Diisocyanate als Mischung eingesetzt. In untergeordneten Mengen, z.B. bis zu 5 Gew.-%, bezogen auf das Gesamtgewicht können die Diisocyanate auch Urethiongruppen, beispielsweise zum Verkappen der Isocyanatgruppen, enthalten.

Unter einem aliphatischen Diisocyanat werden im Rahmen der vorliegenden Erfindung vor allem lineare oder verzweigte Alkylendiisocyanate oder Cycloalkylendiisocyanate mit 2 bis 20 Kohlenstoffatomen, bevorzugt 3 bis 12 Kohlenstoffatomen, z.B. 1,6-Hexamethylendiisocyanat, Isophorondiisocyanat oder Methylen-bis(4-isocyanatocyclo-hexan), verstanden. Besonders bevorzugte aliphatische Diisocyanate sind Isophorondiisocyanat und insbesondere 1,6-Hexamethylendiisocyanat.

Zu den bevorzugten Isocyanuraten zählen die aliphatischen Isocyanurate, die sich von Alkylendiisocyanaten oder Cycloalkylendiisocyanaten mit 2 bis 20 Kohlenstoffatomen, bevorzugt 3 bis 12 Kohlenstoffatomen, z.B. Isophorondiisocyanat oder Methylen-bis(4-isocyanatocyclohexan), ableiten. Dabei können die Alkylendiisocyanate sowohl linear als auch verzweigt sein. Besonders bevorzugt werden Isocyanurate, die auf n-Hexa-methylendiisocyanat basieren, beispielsweise cyclische Trimere, Pentamere oder höhere Oligomere des 1,6-Hexamethylendiisocyanats.

2,2'-Bisoxazoline sind im Allgemeinen erhältlich durch das Verfahren aus Angew. Chem. Int. Ed., Vol. 11 (1972), S. 287-288. Besonders bevorzugte Bisoxazoline sind solche, in denen R¹ eine Einfachbindung, eine (CH₂)_{z}-Alkylengruppe, mit z = 2,3 oder 4 wie Methylen, Ethan-1,2-diyl, Propan-1,3-diyl, Propan-1,2-diyl, oder eine Phenylengruppe bedeutet. Als besonders bevorzugte Bisoxazoline seien 2,2'-Bis(2-oxazolin), Bis(2-oxazolinyl)methan, 1,2-Bis(2-oxazolinyl)ethan, 1,3-Bis(2-oxazolinyl)propan oder 1,4-Bis(2-oxazolinyl)butan, insbesondere 1,4-Bis(2-oxazolinyl)benzol, 1,2-Bis(2-oxazolinyl)benzol oder 1,3-Bis(2-oxazolinyl)benzol genannt.

Die Kettenverlängerer werden vorzugsweise in Mengen von 0,01 bis 5, bevorzugt 0,05 bis 2, besonders bevorzugt 0,08 bis 1 Gew.-%, bezogen auf den Polymerester i eingesetzt.

Die Polyester weisen in der Regel ein zahlenmittleres Molekulargewicht (Mn) im Bereich von 5000 bis 100000, insbesondere im Bereich von 10000 bis 75000 g/mol, bevorzugt im Bereich von 15000 bis 50000 g/mol, ein gewichtsmittleres Molekulargewicht (Mw) von 30000 bis 300000, vorzugsweise 60000 bis 200000 g/mol und ein Mw/Mn-Verhältnis von 1 bis 6, vorzugsweise 2 bis 4 auf. Der Schmelzpunkt liegt im Bereich von 85 bis 130, bevorzugt im Bereich von 95 bis 120°C.

Die Viskositätszahl (VZ) der gebildeten Copolymere liegt bei 100 bis 450 mL/g, bevorzugt bei 110 bis 300 mL/g, und insbesondere bei 120 bis 250 mL/g (gemessen in o-Dichlorbenzol/Phenol (Gewichtsverhältnis 50/50).

Als Komponente i in den erfindungsgemäßen Polymermischungen können auch langkettige Polyhydroxyalkanoate eingesetzt werden, die aus α,ω-C₁₀-C₂₆-Hydroxycarbonsäuren oder genauer ω-Hydroxy-α-C₁₀-C₂₆-carbonsäuren zugänglich sind.

ω-Hydroxy-α-C₁₀-C₂₆-carbonsäuren sind wie in WO2011/008232 beschrieben, zugänglich. Beispielsweise kann C₁₄-Hydroxycarbonsäure durch Biotransformation wie in WO2011/008232. beschrieben, hergestellt werden. Für die Herstellung von Polyester können auch entsprechende Lactone verwendet werden. Die Herstellung von Lactone sind von Witt in seiner Master Thesis, Uni Konstanz 2012 beschrieben. Bevorzugte Hydroxycarbonsäure sind ω-Hydroxy-α-C₁₄-, C₁₅-, C₁₈-, C₁₉-, C₂₃- und C₂₆-carbonsäuren. Besonderes bevorzugt sind ω-Hydroxy-α-C₁₄-und C₁₈-carbonsäure.

Die ω-Hydroxy-α-C₁₀-C₂₆-carbonsäuren können analog zu dem Polyester aus langkettigen Dicarbonsäuren und Diolen polykondensiert werden. Als Katalysatoren werden ebenfalls üblicherweise Zink-, Aluminium- und insbesondere Titankatalysatoren eingesetzt. Titankatalysatoren wie Tetra(isopropyl)orthotitanat und insbesondere Tetrabutylorthotitanat (TBOT) sind als Katalysatoren besonders bevorzugt. Die Polykondensation kann auch wie in der WO 2011/008232 biotechnologisch mittels Lipasen erfolgen.

In den erfindungsgemäßen Polymermischungen werden 0,01 bis 2 Gew.-%, bezogen auf den Polyester, eines Naturwachses (Komponente ii) eingesetzt. Unter Naturwachs werden tierische und pflanzliche Wachse wie Bienenwachs, Carnaubawachs, Candelillawachs, Japanwachs, Espartograswachs, Korkwachs, Guarumawachs, Reiskeimölwachs, Zuckerrohrwachs, Ouricurywachs, Schellackwachs, Walrat, Lanolin (Wollwachs), Bürzelfett, Sasolwachse, Jojobawachse, oder auch Montanwachs verstanden, das aus Braunkohle gewonnen werden kann und damit ebenfalls pflanzlichen Ursprungs ist. Bevorzugt sind Carnaubawachs, Candelillawachs, Montanwachs und insbesondere Bienenwachs.

Die erfindungsgemäße Polymermischung kann auch Mineralien wie Glimmer, Wollastonit, Kaolin, Talkum, Kreide, Schichtsilikate, Graphen enthalten.

Weiterhin kann die erfindungsgemäße Polymermischung weitere, dem Fachmann bekannte, Additive enthalten. Beispielsweise die in der Kunststofftechnik üblichen Zusatzstoffe wie Stabilisatoren; Nukleierungsmittel; Gleit- und Trennmittel wie Stearate (insbesondere Calziumstearat); Weichmacher (Plastifizierer) wie beispielsweise Zitronensäureester (insbesondere Acetyltributylcitrat), Glycerinsäureester wie Triacetylglycerin oder Ethylenglykolderivate, Tenside wie Polysorbate, Palmitate oder Laurate; Antistatikum, UV-Absorbers; UV-Stabilisators; Antifog-Mittel oder Farbstoffe. Die Additive werden in Konzentrationen von 0 bis 5 Gew.-%, insbesondere 0,1 bis 2 Gew.-% bezogen auf die erfindungsgemäßen Polyester eingesetzt. Weichmacher können in 0,1 bis 10 Gew.-% in den erfindungsgemäßen Polyestern enthalten sein.

Aufgrund ihrer sehr guten Barriereeigenschaften lassen sich die erfindungsgemäßen Polymermischungen zu Barrierefilmen in Monofolien oder Mehrschichtfolien verarbeiten. Diese Filme erweisen sich als sehr effiziente Wasserdampfsperre. Auch kann mit den erfindungsgemäßen Polymermischungen Papier beschichtet werden und die Wasserdampfbarriere des Papiers dramatisch verbessert werden.

### Beispiele

### 1. Polybutylene-α,ω-C₁₈-dicarboxylat (Polyester 1)

Eine Mischung aus 170g α,ω-C₁₈ -Dicarbonsäure, 64g 1,4-Butandiol und 0,14g Tetrabutylorthotitanat (TBOT) wurde unter einem N₂-Strom für 90min bis 200°C erhitzt. Das dabei gebildete Wasser wurde abdestilliert. Dann wurde die Temperatur auf 240°C erhöht und Vakuum (< 1 mbar) für ca. 120min angelegt. Die Polyesterschmelze wurde abgelassen.

### 2. Polyethylene-α,ω-C₁₈-dicarboxylat (Polyester 2)

Eine Mischung aus 170g α,ω-C₁₈-Dicarbonsäure, 43,6g Ethylenglykol und 0,14g TBOT wurde unter einem N₂-Strom für 90min bis 200°C erhitzt. Das dabei gebildete Wasser wurde abdestilliert. Dann wurde die Temperatur auf 240°C erhöht und Vakuum (< 1 mbar) für ca. 120min angelegt. Die Polyesterschmelze wurde abgelassen.

### 3. Polybutylene-α,ω-C₁₉-dicarboxylat (Polyester 3)

Eine Mischung aus 24,0g α,ω-C₁₉ -Dicarbonsäuredimethylester, 18,2g 1,4-Butandiol und 0,018g TBOT wurde unter einem N₂-Strom für 90min bis 180°C erhitzt. Das dabei gebildete Methanol wurde abdestilliert. Dann wurde die Temperatur auf 205°C erhöht und Vakuum (< 1 mbar) für ca. 160min angelegt. Die Polyesterschmelze wurde abgelassen.
Tm: 87°C, VZ: 104ml/g

### 4. Polybutylene-α,ω-C₂₃-dicarboxylat (Polyester 4)

Eine Mischung aus 19,5g α,ω-C₂₃ -Dicarbonsäurediethylester, 12,2g 1,4-Butandiol und 0,014g TBOT wurde unter einem N₂-Strom für 90min bis 180°C erhitzt. Das dabei gebildete Ethanol wurde abdestilliert. Dann wurde die Temperatur auf 200°C erhöht und Vakuum (< 1 mbar) für ca. 160min angelegt. Die Polyesterschmelze wurde abgelassen.
Tm: 96°C, VZ: 175ml/g

### 5. Poly-ω-Hydroxy-α-C₁₄-carboxylat (Polyester 5)

Die Mischung aus 100g ω-Hydroxy-α-C₁₄-carbonsäure und 700ppm TBOT wurde für 90min bis 200°C erhitzt. Das gebildete Wasser wurde abdestilliert. Dann wurde die Temperatur auf 220°C erhöht und Vakuum (< 1 mbar) wurde a für ca. 120min angelegt. Die Hochviskose Schmelze wurde abgelassen.

### V-1 Polybutylene-α,ω-C₁₆-dicarboxylat (Vergleichsbeispiel)

Eine Mischung aus 85,9g α,ω-C₁₆-Dicarbonsäure, 35,2g 1,4-Butandiol und 0,04g TBOT wurde unter einem N₂-Strom für 90min bis 200°C erhitzt. Das dabei gebildete Wasser wurde abdestilliert. Dann wurde die Temperatur auf 260°C erhöht und Vakuum (< 1 mbar) für ca. 180min angelegt. Die Polyesterschmelze wurde abgelassen.

### Herstellung von Polyester-Wachsmischungen

In einem DSM-Miniextruder wurde der jeweilige Polyester bei 160°C für 2 min aufgeschmolzen, dann die in Tabelle 1 angegebene Menge Wachs zugegeben und für 5 min gemischt.

### Messung der Wasserdampfdurchlässigkeit nach ASTM F-1249

Zur Messung der Wasserdampfdurchlässigkeit wurden die Folien aus den Polyestern bzw. Polyestermischungen bei Pressen bei 160°C hergestellt. Die Foliendicke betrug ca. 100µm. Wasserdampfdurchlässigkeit wurde mit der Methode beschrieben in ASTM F1249 bei 23°C und einer relativen Feuchtigkeit von 85% gemessen. Die Ergebnisse sind in Tabelle 1 zusammengefasst.

**Tabelle 1: Wasserdampfdurchlässigkeit (g/µm/m2/day)**

| PE 1 [Gew.-%] | PE 2 [Gew.-%] | PE 3 [Gew.-%] | PE 4 [Gew.-%] | PE 5 [Gew.-%] | Vgl. PE [Gew.-%] | Bienenwachs [Gew.-%] | Wasserdampfdurchlässigkeit [g/µm/m2/day] |
|---|---|---|---|---|---|---|---|
| | | | | | | | |
| 100 | | | | | | | 715 |
| 99,8 | | | | | | 0,2 | 451 |
| | 100 | | | | | | 639 |
| | 99,8 | | | | | 0,2 | 432 |
| | | 100 | | | | | 727 |
| | | 99,8 | | | | 0,2 | 413 |
| | | | 100 | | | | 655 |
| | | | 99,8 | | | 0,2 | 401 |
| | | | | 100 | | | 890 |
| | | | | 99,8 | | 0,2 | 167 |
| | | | | 99,5 | | 0,5 | 251 |
| | | | | 98 | | 2,0 | 264 |
| | | | | | | | |
| | | | | | 100 | | 2600 |
| | | | | | 99,8 | 0,2 | 1935 |

## Patentansprüche

1. Polymermischung enthaltend:
i) 98 bis 99,99 Gew.-%, bezogen auf die Komponenten i bis ii, eines Polykondensats erhältlich aus den Monomeren:
a) mindestens einer α,ω-C₁₈-C₃₀-Dicarbonsäure oder eines entsprechenden Dicarbonsäurederivats und
b) mindestens eines α,ω-C₂-C₃₀-Diols;
oder erhältlich aus dem Monomer:
a') einer ω-Hydroxy-α-C₁₀-C₂₆-carbonsäure;
ii) 0,01 bis 2 Gew.-%, bezogen auf die Komponenten i bis ii, mindestens eines Naturwachses.

2. Polymermischung nach Anspruch 1, wobei das Naturwachs ausgewählt ist aus der Gruppe bestehend aus: Bienenwachs, Carnaubawachs, Candelillawachs und Montanwachs.

3. Polymermischung nach Anspruch 1 oder 2, mit einer Wasserdampfbarriere nach ASTM F-1249 (bei 23°C, 85% relative Feuchtigkeit) von kleiner 1000 g · µm⁻¹ · m-² · d-¹.

4. Polymermischung nach Anspruch 1, wobei das Polykondensat i ein Polyester aus
a) mindestens einer α,ω-C₁₈-C₂₃-Dicarbonsäure oder eines entsprechenden Dicarbonsäurederivats und
b) eines α,ω-C₂-C₆-Diols, ist.

5. Polymermischung nach Anspruch 1, wobei das Polykondensat i ein Polyester aus
a) mindestens einer α,ω-C₁₈Dicarbonsäure oder eines entsprechenden Dicarbonsäurederivats und
b) eines α,ω-C₂-C₄-Diols, ist.

6. Polymermischung nach Anspruch 1, wobei das Polykondensat i ein Polyester einer ω-Hydroxy-α-C₁₂-C₂₃-carbonsäure ist.

7. Polymermischung nach Anspruch 6, wobei das Polykondensat i ein Polyester einer ω-Hydroxy-α-C₁₄-carbonsäure oder ω-Hydroxy-α-C₁₈-carbonsäure ist.

8. Barrierefilm enthaltend eine Polymermischung nach einem der Ansprüche 1 bis 7.

9. Mehrschichtfolie, wobei mindestens eine Schicht eine Polymermischung nach einem der Ansprüche 1 bis 7 enthält.

10. Verwendung einer Polymermischung nach einem der Ansprüche 1 bis 7 zur Beschichtung von Papier.

## Claims

1. A polymer mixture comprising:
i) from 98 to 99.99% by weight, based on components i to ii, of a polycondensate obtainable from the following monomers:
a) at least one α,ω-C₁₈-C₃₀-dicarboxylic acid or a corresponding dicarboxylic acid derivative, and
b) at least one α,ω-C₂-C₃₀-diol;
or obtainable from the following monomer:
a') a ω-hydroxy-α-C₁₀-C₂₆-carboxylic acid;
ii) from 0.01 to 2% by weight, based on components i to ii, of at least one natural wax.

2. The polymer mixture according to claim 1, where the natural wax is one selected from the group consisting of: beeswax, carnauba wax, candelilla wax, and montan wax.

3. The polymer mixture according to claim 1 or 2, with a water-vapor barrier smaller than 1000 g · µm⁻¹ · m-² · d-¹ in accordance with ASTM F1249 (at 23°C and 85% relative humidity).

4. The polymer mixture according to claim 1, where the polycondensate i is a polyester made of
a) at least one α,ω-C₁₈-C₂₃-dicarboxylic acid or a corresponding dicarboxylic acid derivative, and
b) an α,ω-C₂-C₆-diol.

5. The polymer mixture according to claim 1, where the polycondensate i is a polyester made of
a) at least one α,ω-C₁₈-dicarboxylic acid or a corresponding dicarboxylic acid derivative, and
b) an α,ω-C₂-C₄-diol.

6. The polymer mixture according to claim 1, where the polycondensate i is a polyester of an ω-hydroxy-α-C₁₂-C₂₃-carboxylic acid.

7. The polymer mixture according to claim 6, where the polycondensate i is a polyester of an ω-hydroxy-α-C₁₄-carboxylic acid or ω-hydroxy-α-C₁₈-carboxylic acid.

8. A barrier film comprising a polymer mixture according to any of claims 1 to 7.

9. A multilayer foil where at least one layer comprises a polymer mixture according to any of claims 1 to 7.

10. The use of a polymer mixture according to any of claims 1 to 7 for the coating of paper.

## Revendications

1. Mélange de polymères, contenant
i) 98 à 99,99% en poids, par rapport aux composants i à ii, d'un produit de polycondensation pouvant être obtenu à partir des monomères ;
a) au moins un acide α,ω-C₁₈-C₃₀-dicarboxylique ou un dérivé d'acide dicarboxylique correspondant et
b) au moins un α,ω-C₂-C₃₀-diol ; ou pouvant être obtenu à partir du monomère :
a') un acide ω-hydroxy-α-C₁₀-C₂₆-carboxylique ;
ii) 0,01 à 2% en poids, par rapport aux composants i à ii, d'au moins une cire naturelle.

2. Mélange de polymères selon la revendication 1, la cire naturelle étant choisie dans le groupe constitué par : la cire d'abeille, la cire de caroube, la cire de candelilla et la cire de montane.

3. Mélange de polymères selon la revendication 1 ou 2, présentant une barrière à la vapeur d'eau selon la norme ASTM F-1249 (à 23°C, humidité relative de 85%) inférieure à 1000 g µm⁻¹ * m⁻² * d⁻¹.

4. Mélange de polymères selon la revendication 1, le produit de polycondensation i étant un polyester
a) d'au moins un acide α,ω-C₁₈-C₂₃-dicarboxylique ou d'un dérivé d'acide dicarboxylique correspondant et
b) d'un α, ω-C₂-C₆-diol.

5. Mélange de polymères selon la revendication 1, le produit de polycondensation i étant un polyester
a) d'au moins un acide α,ω-C₁₈-dicarboxylique ou d'un dérivé d'acide dicarboxylique correspondant et
b) d'un α,ω-C₂-C₄-diol.

6. Mélange de polymères selon la revendication 1, le produit de polycondensation i étant un polyester d'un acide ω-hydroxy-α-C₁₂-C₂₃-carboxylique.

7. Mélange de polymères selon la revendication 6, le produit de polycondensation i étant un polyester d'un acide ω-hydroxy-α-C₁₄-carboxylique ou d'un acide ω-hydroxy-α-C₁₈-carboxylique.

8. Film formant une barrière contenant un mélange de polymères selon l'une quelconque des revendications 1 à 7.

9. Feuille multicouche, au moins une couche contenant un mélange de polymères selon l'une quelconque des revendications 1 à 7.

10. Utilisation d'un mélange de polymères selon l'une quelconque des revendications 1 à 7 pour le recouvrement de papier.
